Europäisches Patentamt

European Patent Office

Office européen des brevets

(19)

(11) Publication number: **0 047 038**
**B1**

# EUROPEAN PATENT SPECIFICATION

(45) Date of publication of patent specification: 01.08.84

(21) Application number: 81200945.4

(22) Date of filing: 27.08.81

(51) Int. Cl.³: **B 29 D 27/04,**
**B 63 B 35/72,**
**A 63 C 15/00, B 29 C 5/04,**
**B 32 B 27/08**

(54) Polyolefin layer with improved adhesion to a plastic substrate.

(30) Priority: 30.08.80 NL 8004959

(43) Date of publication of application:
10.03.82 Bulletin 82/10

(45) Publication of the grant of the patent:
01.08.84 Bulletin 84/31

(84) Designated Contracting States:
AT BE CH DE FR GB IT LI NL SE

(56) References cited:
DE - A - 2 617 357
GB - A - 1 494 897
GB - A - 1 532 629
US - A - 3 187 069
US - A - 3 527 667
US - A - 3 995 984

(73) Proprietor: STAMICARBON B.V.
Postbus 10
NL-6160 MC Geleen (NL)

(72) Inventor: Peerlkamp, Erik Rijkele
Klein Holtum 39
NL-6121 EG Born (NL)

(74) Representative: De Boer, Jan et al,
OCTROOIBUREAU DSM Postbus 9
NL-6160 MA Geleen (NL)

Courier Press, Leamington Spa, England.

## Description

The invention relates to a process of fabricating an article consisting of a polyolefin shell to the inside of which a polyurethane foam is applied, by rotational moulding the shell of said article out of at least an outside layer of polyolefin that is stabilized in the usual way and then applying the polyurethane foam.

The invention also relates to an article, e.g. a surfboard, consisting of a shell made of polyolefin, e.g. polyethylene, the outside of the shell being of stabilised polyolefin, to the inside of which shell a plastic substrate is applied.

Because of their structure, polyolefin plastics are more or less inert. Of the polyolefins produced on a very large scale, polyethylene and polypropylene, polyethylene is more inert. Therefore it is difficult or impossible to bond. It adheres hardly or not at all to a substrate, e.g. metal surfaces, foamed plastics, etc. To make polyethylene adhere to a substrate, use has to be made of an adhesive, or it is necessary to etch the surface of the polyethylene or the substrate. However, the use of adhesives effects only a limited degree of adhesion, as a result of the poor bonding properties of polyethylene, and moreover requires an extra treatment, which increases the cost price. Etching of one or both surfaces to be bonded together is a laborious treatment, which, like the application of adhesives, lengthens production time and increases the cost price. Difficulties of the same kind are encountered also with polypropylene.

It is known that objects can be made from plastics by heating powders in a mould. The powder melts on the hot wall and forms a layer. Foam structures between layers or against a layer may be applied to improve insulating properties or to limit the weight of the objects. The surface layer and the foamed or unfoamed layer in contact with it should adhere to each other. With polyethylene in particular, but also with polypropylene, the adhesion leaves much to be desired. This problem is met with in particular in the manufacture of surf-boards, which are mostly made by rotational moulding, of a shell of polyethylene, in particular polyethylene having high or medium density, i.e. a density of at least 0.930 kg/dm³, although it is also possible to use a polyethylene of lower density. The space in between the surface layers is filled with a polyurethane foam, resulting in an object of polyurethane foam with a coating of polyethylene.

During use, the polyethylene coating may get damaged, after which water can penetrate into the foam. If there is good adhesion between shell and foam, damage is less likely to occur. Also, in this case water can penetrate into the foam only under the damaged spot, whereas if adhesion is poor, water can distribute between shell and foam and can thus be absorbed by all of the foam. Good adhesion is highly desirable for surf-boards in particular, but also for other objects built up of similar components, and a need for such good adhesion is consequently felt everywhere.

US—A—3,527,667 describes the coating of metal substrates with polymers of α-olefins and discloses that the presence of anti-oxidants is inhibiting the adherence of the polymer layer to the substrate. However, the absence of anti-oxidants does not enable the adherence of polyolefins to other plastics, like e.g. a polyolefin layer to polyurethane foam.

US—A—3,639,189 proposes to improve the adhesion of polyethylene to metal substrates by blending the polyethylene with oxidized polyethylene. The oxidized polyethylene is obtained by heating polyethylene in an oxygen atmosphere at temperatures that may range from 90°C up to the crystalline melting point of the polyethylene until the desired oxygenation has been reached. Next, the polyethylene is melt-blended with the oxidized polyethylene, and granulated. The granulate thus obtained is used for the layers to be applied to a metal substrate. The oxidation of the polyethylene is a laborious process and increases the cost price.

A composition of this kind is less suited for the manufacture of, say, surf-boards because oxidized polyethylene lowers the resistance of the polyethylene composition to atmospheric influences. Notably the resistance to thermal and oxidative attack is lowered, which in particular for an outer wall, such as the polyethylene coating of a surf-board, which is exposed to outdoor atmospheric influences, is highly undesirable. This drawback might admittedly be obviated by including more stabilizers in the polyethylene composition, but this, again, raises the cost price. Moreover, the use of compositions containing oxidized polyethylene in the manufacture of objects in a mould by, for instance, rotational moulding has the disadvantage that compositions of this kind adhere also to the mould. Even if use is made of non-oxidized polyethylene it is necessary to apply release agents in order to facilitate the release of the polyethylene object from the mould, but when use is made of oxidized polyethylene difficulties are still encountered in removing the object from the mould even if release agents are applied.

It has already been attempted to improve properties as well as adhesion by applying a cross-linked polyolefin, by preference cross-linked polyethylene, or by cross-linking the polyethylene after it has been formed into a surface layer. Improvement of the adhesion proved possible, but there remains a disadvantage in that damage to the surface layer is difficult or impossible to repair.

It has now been found that in the process described in the first paragraph of page 1 the adhesion of the polyolefin shell to the polyurethane foam can be improved by providing inside said outside layer another layer of an unstabilized or little stabilized polyolefin, and allowing said inside layer to oxidize.

According to another aspect of the invention is the adhesion of the polyolefin shell to the plastic substrate of the article that is described in the second paragraph of page 1 improved in that the inside surface of the polyolefin shell is of unstabilised polyolefin which has been oxidized.

Polyolefin layers made according to the process of the invention can easily be repaired by melt-welding when damaged, which cannot, or only to a much smaller degree, be done if use has been made of a cross-linked material, or if the material has been cross-linked afterwards.

So-called rotational moulding is a procedure in which a quantity of a synthetic thermoplastic is introduced into a mould that can rotate and/or rock about one or more axes. The mould is meanwhile heated to above the melting point of the plastic, and the slow rotational or rocking motion evenly distributes the powder over the mould surface.

By introducing another quantity of the same or a different plastic into the mould a number of layers can be formed. The space within the polyolefin shell formed on the wall of the mould can be filled out with foam, for instance polyurethane foam. The foam should adhere to the polyolefine shell, but the whole should be readily released by the mould.

The invention will be further elucidated with reference to polyethylene, but it will be clear that the invention is not restricted to the use of this material.

In general, polyethylene is marketed in the form of granules. For applications such as rotational moulding it has to be used in powder form, however. The particle size of such powders is below 2 mm, preferably below 1 mm. More in particular, such powders have a particle size in the order of 0.5 mm, e.g. 0.3—0.6 mm. In most cases the powders are prepared by grinding of a granulate. Polyethylene comes available in the form of a powder, admittedly, if the polymerization is carried out in a so-called suspension process or a gas-phase process, but the morphological and rheological properties of powders so obtained are generally poor. Therefore they are first granulated and next ground.

The processing of polyethylene, in particular high-density polyethylene, takes place at temperatures above 140°C, and for this reason the granulate is stabilized for protection from thermal breakdown. The polyethylene is also stabilized for protection from oxidative attack and from the influence of light, in particular UV radiation, with a view to rendering objects made of the polyethylene resistant to atmospheric influences. Stabilization against oxidative modification is also necessary to prevent rapid attack when the polymer comes into contact with oxygen, e.g. air oxygen, during processing. In many cases small amounts of stabilizers giving protection from thermal and oxidative modification are added to ethylene after polymerization, to protect the polymer during further processing. During the granulation at the end of the procesing operation further amounts of stabilizers are added. If this addition is omitted, a non-stabilized or hardly stabilized polyethylene is obtained, i.e. a polymer that contains at any rate less than 0.01 % wt., more in particular less than 0.005% wt, stabilizing agents.

If now such a polyethylene, not or little stabilized, is used in making objects in a mould, for instance by rotational moulding, oxidative modifications will occur wherever the polyethylene gets into contact with air at elevated temperatures. In most cases air is present in the mould, and when the mould is heated this will result in a noticeable oxidative modification of the polyethylene, such as oxidation, whether or not accompanied by chain breakdown, cross-linking, etc. This gives the polyethylene improved adhesion.

The presence of stabilizers results in the polyethylene being left unoxidized or hardly noticeably oxidized under the processing conditions. The effect of the invention is brought about by the presence of oxidized groups in the polyethylene, which groups should be capable of forming in the inner layer during processing. This can easily be demonstrated by means of infra-red analysis. The unstabilized or little stabilized polyethylene of the inner layer then shows a clearly visible band at 1650—1800 $cm^{-1}$, which is indicative of C=O bonds. The stabilized polyethylene of the outer layer should not, or hardly, show such a band.

If the polyurethane foam is introduced into a shell made of an unstabilized or little stabilized polyethylene, adhesion is found to be so strong that attempts to sever the polyethylene from the polyurethane foam results in rupturing of the foam, not at the plane of adhesion. An unstabilized or little stabilized polyethylene admittedly adheres strongly to the polyurethane foam or to other substrates, but, in the first place, such a layer has insufficient resistance to atmospheric influences, so that objects made of it will weather in an unacceptably short time, with strong deterioration of the mechanical properties and, secondly, such a layer adheres also to the wall of the mould. In spite of the use of release agents, it proves difficult to remove the object from the mould. Therefore, the outer layer is now made of stabilized polyethylene, and the layer of unstabilized polyethylene is provided within it. This effects good adhesion to the substrate, whilst release from the mould wall remains easy, and, in addition, the outer layer has good resistance to weathering.

During the rotational moulding, the unstabilized or little stabilized polyethylene will be slightly oxidized. The layer made of it now adheres strongly to substrates to which it is applied.

Infra-red analysis of two layers made by rotational moulding in accordance with the invention very clearly showed the presence of C=O groups on the inner layer. This was revealed by the occurrence of a band at 1650—1800 cm⁻¹, where the outer layer did not show a band at 1650—1800 cm⁻¹. It may be concluded that the inner layer has been oxidized, whereas in the outer one at most an insignificant degree of oxidation can have taken place.

Some oxidation of the outer layer cannot always be excluded. In some cases this results in the occurrence of a very weak band at 1650—1800 cm⁻¹. Although some oxidation is permissible, it should be kept as limited as possible.

According to the invention the layers are made by rotational moulding and thereby the amount of unstabilized polyolefin used must not be such as to lead to problems in stabilization. This point has to be considered in determining the quantity of unstabilized polyolefin to be used.

During the production of layers according to the invention migration of stabilizing agents occurs. Insofar as this does not already result in a homogeneous distribution, such distribution will be reached in course of time, as migration continues, albeit slowly, at ambient temperature. The layer of polyethylene will then end up being uniformly stabilized and resistant to atmospheric influences. If this situation is to be reached it is, of course, necessary that the polyethylene layers should contain a sufficient quantity of stabilizing agents. This is to be taken into account in determining the amounts of stabilized and unstabilized polyethylene that will be used. Provisions of this kind are outside the scope of the invention, as also compositions that in their entirety are slightly under-stabilized show improved adhesion to substrates within the scope of the invention.

In general, stabilized polyethylene contains at least 0.01% wt. stabilizing agents, and, in total, in most cases at least 0.025% wt. The amounts of stabilizing agents incorporated in the polyethylene are determined by the stability desired. In most cases more than one stabilizing agent is added, because stabilization against various effects is desired, and also because many combinations of stabilizing agents bring synergetic effects. Use may be made of low-density as well as of high-density polyethylene, but polyethylene with a density of at least 0.930 kg/dm³ is in general preferred.

The process according to the invention can be realized not only with polyethylene, but also with polypropylene and other polyolefins. Of the polymers of other olefins only the polyisobutylenes have commercial importance. However, these are elastomers, mostly marketed in modified form, whose main applications are in other fields. Further, limited amounts of polybutylene and poly-4-methylpentene-1 are sold on the market. By the side of homopolymers, many copolymers are produced. Polyolefins, e.g. polyethylene or polypropylene, with comparatively small amounts of comonomers, at most 10 mol %, can, in general, also be used very well.

The invention will be further elucidated in the following examples.

Example 1

A hollow object is made by rotational moulding of a powdery polyethylene having a melt index (ASTM D-1238, condition E) of 4.5, a density of 0.938 kg/dm³, and a mean particle size of 450 $\mu$m, which has been stabilized with 0.25 % wt. 2-hydroxy-4-n-octoxybenzophenone and 0.05% wt. octadecyl-3-(3,5-di-tert.butyl-4-hydroxyphenyl)propionate, after which a thinner layer is produced inside this object, of a powdery polyethylene having a melt index of 8, a density of 0.963 kg/dm³, and, likewise, a mean particle size of 450 $\mu$m, which contains only 0.004% wt. of the octadecyl-3-(3,5-di-tert. butyl-4-hydroxyphenyl) propionate. The amount of material used for this thinner layer is 1/4 of the amount of material used for the outer layer. The maximum mould temperature is about 275°C, the rotation time is 15 min for the outer layer and 5 min for the inner layer.

Next, polyurethane is foamed inside the hollow object. Thereafter, sections with a surface area of 5×6 cm are cut from the resultant object, so that blocks of polyurethane foam covered on two sides with a polyurethane coating are obtained. These blocks are subjected to a tensile test in which an elongation rate of 1 cm/min is applied.

The strength of the bond between the polyethylene and the polyurethane cannot be established, as the polyurethane foam ruptures, but it is at least 0.260 N/mm².

Comparative Example A

In the manner described in Example 1 a hollow object was produced exclusively of the stabilized polyethylene. Determination of the bonding strength presented difficulties, as the polyethylene coating began to come loose already when the blocks of polyurethane foam were being clamped in the machine. In the tensile test the polyethylene came clear of the foam already before a measurable value could be recorded. The plane of separation was clean, with no polyurethane foam remaining on the polyethylene.

Comparative Example B

Example 1 was repeated, with the use of the unstabilized polyethylene only. Release from the mould was attended with difficulties. The strength of the bond with the polyurethane foam was at least 0.270 N/mm². In the tensile test the polyurethane foam ruptured.

Example 2

Example 1 was repeated with a commercially obtainable stabilized polyethylene having a melt index (ASTM D-1238, condition E) of 4.5 ground to a mean particle size of 400 $\mu$m, within which was provided a layer of polypropylene having a melt index of 10 (ASTM D-1238, condition L), a density of 0.910 kg/dm³, and a mean particle size of 450 $\mu$m, which contained only 0.004% wt octadecyl-3-(3,5-di-tert.butyl-4-hydroxyphenyl)propionate. The amount of polypropylene was 1/4 of the amount of polyethylene.

Also in this case, rupturing of the foam occurred in the tensile test and the bonding strength was at least 0.260 N/mm².

**Claims**

1. Process of fabricating an article consisting of a polyolefin shell to the inside of which a polyurethane foam is applied, by rotational moulding the shell of said article out of at least an outside layer of polyolefin that is stabilized in the usual way and then applying the polyurethane foam, characterized in providing inside said outside layer another layer of an unstabilized or little stabilized polyolefin, and allowing said inside layer to oxidize.

2. Process according to claim 1, characterized in that the polyolefin used for the inside layer is polyethylene.

3. Article, e.g. a surfboard, consisting of a shell made of polyolefin, e.g. polyethylene, the outside of the shell being of stabilized polyolefin to the inside of which shell a plastic substrate is applied, the article being characterized in that the inside surface of the polyolefin shell is of unstabilized polyolefin which has been oxidized.

**Revendications**

1. Procédé de fabrication d'un article constitué d'une enveloppe polyoléfinique à l'intérieur de laquelle est appliquée une couche de mousse de polyuréthane, en moulant par rotation l'enveloppe dudit article constituée d'au moins une couche polyoléfinique qui est stabilisée de façon usuelle et en appliquant ensuite la mousse de polyuréthane, caractérisé en ce qu'à l'intérieur de ladite couche extérieure, on réalise une autre couche de polyoléfine pas ou peu stabilisée et en faisant oxyder ladite couche intérieure.

2. Procédé selon la revendication 1, caractérisé en ce que la polyoléfine, utilisée pour la couche intérieure, est du polyéthylène.

3. Article, par exemple une planche à voile ou un monoski, constitué d'une enveloppe fabriquée de polyoléfine, par exemple du polyéthylène, alors que le côté extérieur de l'enveloppe est fabriquée de polyoléfine stabilisée et qu'on applique un substrat plastique sur le côté intérieur de l'enveloppe, caractérisé en ce que la surface intérieure de l'enveloppe de polyoléfine est fabriquée de polyoléfine non stabilisée qu'on a fait oxyder.

**Patentansprüche**

1. Verfahren zur Herstellung eines Artikels bestehend aus einer Polyolefinschale, an deren Innenseite ein Polyurethanschaum angebracht ist, durch Rotationsformen der Schale des Gegenstandes aus mindestens einer Außenschicht von Polyolefin, das in üblicher Weise stabilisiert ist, und dann Anbringen des Polyurethanschaumes, dadurch gekennzeichnet, daß an der Innenseite der Außenshicht eine andere Schicht eines unstabilisierten oder wenig stabilisierten Polyolefins erzeugt und diese Innenschicht oxidieren gelassen wird.

2. Verfahren nach Anspruch 1, dadurch gekennzeichnet, daß als Polyolefin für die Innenschicht Polyäthylen verwendet wird.

3. Gegenstand, z.B. ein Surfbrett, bestehend aus einer Schale, die aus Polyolefin, z.B. Polyäthylen, hergestellt ist und deren Außenseite aus stabilisiertem Polyolefin besteht, und einem Kunststoffsubstrat, das an der Innenseite der Schale angebracht ist, dadurch gekennzeichnet, daß die innere Oberfläche der Schale des Gegenstandes aus unstabilisiertem Polyolefin, das oxidiert worden ist, besteht.